# EUROPÄISCHE PATENTANMELDUNG

(11) **EP 1 193 017 A2**
(43) Veröffentlichungstag der Anmeldung: **03.04.2002**
(21) Anmeldenummer: 01119993.2
(22) Anmeldetag: 18.08.2001
(51) Int. Cl.: B23H 7/26, B23B 29/04, B23Q 1/00, B23Q 16/00

(54) **Spannfutter**

(30) Priorität: 25.08.2000 DE 10041844
(71) Anmelder: System 3R International AB, 162 50 Vällingby (SE)
(72) Erfinder: Schill, Albrecht Paul, 16570 Stockholm (SE); Pettersson, Björn, 17564 Järfälla (SE)
(74) Vertreter: Zinngrebe, Horst, Dr.rer.nat.

(57) **Zusammenfassung**

Beschrieben wird ein Spannfutter mit einer mittigen Aufnahme und einer um die Aufnahme angeordneten, zwischen einer Spannstellung, in welcher ein in die Aufnahme eingeführter Zugbolzen angespannt ist, und einer Freigabestellung, in der der Zugbolzen freigegeben ist, beweglichen Scheibe, welche ein Gesperrre mit mehreren in Umfangsrichtung gleich verteilten Sperrelementen aufweist, sowie mit einer Blockiervorrichtung, die Bewegungen der Scheibe unter dem Einfluß von axialen Zugkräften auf den angespannten Zugbolzen erschwert. Damit eine selbsttätige Rückkehr der Scheibe aus ihrer Spannstellung in die Freigabestellung verhindert oder zumindest erschwert wird, ist der Zugbolzen mit einer Bremse derart kraftschlüssig gekoppelt, dass die Bremskraft der Bremse proportional zu einer auf den Zugbolzen ausgeübten Zugkraft ist.

## Beschreibung

Die Erfindung betrifft ein Spannfutter mit einer mittigen Aufnahme und einer um die Aufnahme angeordneten, zwischen einer Spannstellung, in welcher ein in die Aufnahme eingeführter Zugbolzen angespannt ist, und einer Freigabestellung, in der der Zugbolzen freigegeben ist, beweglichen Scheibe, welche ein Gesperre mit mehreren in Umfangsrichtung gleich verteilten Sperrelementen aufweist, sowie mit einer Blockiervorrichtung, die Bewegungen der Scheibe unter dem Einfluß von axialen Zugkräften auf den angespannten Zugbolzen erschwert.

Das in dem Dokument EP-0255042 beschriebene Spannfutter ist mit einem mehrere in Umfangsrichtung gleich verteilte Kugeln aufweisenden Kugelgesperre ausgerüstet, wobei in einer die Aufnahme umgebenden Scheibe für jede Kugel eine bezüglich der Mittelachse der Aufnahme radiale Tasche vorgesehen ist. Durch ein Antriebsmittel, wie beispielsweise Druckluft, ist die Scheibe aus der Freigabestellung in die Spannstellung bewegbar, in welcher die Kugeln radial gegen den Zugbolzen gedrängt werden, so dass die Kugeln eine an dessen endnaher Peripherie ausgebildete, zur Mittelachse schräge Ringfläche unterfassen. Eine selbsttätige Rückkehr der Kugeln in radialer Richtung in die Taschen etwa unter der Wirkung von auf den Zugbolzen ausgeübten axialen Zugkräften wird durch das Druckmittel verhindert, welches die Scheibe erst dann nicht mehr mit Druck beaufschlagt, wenn der Zugbolzen freigegeben werden kann.

Die auf den Zugbolzen einwirkenden axialen Zugkräfte können relativ hoch sein, wenn ein mit dem Zugbolzen verbundenes Werkstück spanabhebend bearbeitet wird. Die axialen Zugkräfte sind wesentlich geringer, wenn das Werkstück elektroerosiv bearbeitet wird.

Bei einem manuell betätigbaren Spannfutter ragt ein mit der Scheibe verbundener Handgriff durch einen Gehäuseschlitz nach außen, bei dessen Betätigung beispielsweise innerhalb einer zur Mittellinie der Aufnahme querliegenden Ebene die Scheibe zwischen ihrer Spannstellung und ihrer Freigabestellung verdreht werden kann. Nach Loslassen des Handgriffes wird die Scheibe nicht mehr in Richtung auf ihre Spannstellung beaufschlagt, so dass bei axialem Zug auf den angespannten Zugbolzen die Gefahr besteht, dass die Scheibe sich in Richtung auf ihre Freigabestellung bewegt . Die eingangs genannte Blockiervorrichtung wird daher zweckmäßig als eine an der Scheibe ausgebildete Bremse ausgeführt, die mit einer Innenfläche des das Gesperre umgebenden Gehäuses in Reibschluß steht. Die Bremskraft der Bremse muß so groß sein, dass sie den vor allem bei spanabhebender Bearbeitung eines Werkstücks auftretenden Zugkräften auf den Zugbolzen stand halten kann. Eine große Bremskraft erschwert jedoch die manuelle Verstellung der Scheibe von der Spannstellung in die Freigabestellung und umgekehrt, und ist darüber hinaus für eine elektroerosive Werkstückbearbeitung nicht erforderlich.

Der Erfindung liegt daher die Aufgabe zugrunde, an dem eingangs genannten Spannfutter verbesserte Maßnahmen vorzusehen, die die selbsttätige oder durch eine Zugkraft auf den angespannten Zugbolzen ausgelöste Rückkehr der Scheibe aus ihrer Spannstellung in die Freigabestellung verhindern oder zumindest erschweren.

Dazu ist erfindungsgemäß vorgesehen, dass bei dem eingangs genannten Spannfutter der Zugbolzen mit einer Bremse derart kraftschlüssig gekoppelt ist, dass die Bremskraft der Bremse proportional zu einer auf den Zugbolzen ausgeübten Zugkraft ist. Die Erfindung bringt den Vorteil, dass sich der Zugbolzen selbst in seiner Anspannstellung hält, weil axiale Zugkräfte auf ihn für die erforderliche Bremskraft gegen eine Verstellung der Scheibe sorgenWeiter ist vorteilhaft, dass die Verstellung der Scheibe von ihrer Freigabestellung in ihre Spannstellung und umgekehrt praktisch kräftefrei per Hand erfolgen kann weil ohne Zugkraft keine Bremswirkung vorhanden ist.

Die Erfindung gestattet zahlreiche vorteilhafte Ausgestaltungen. So kann die Blockiervorrichtung als Axialbremse oder als Radialbremse ausgebildet sein. Die axiale Bremse ist zweckmäßig in der Weise ausgestaltet, dass auf die drehbare, in dem Gehäuse axial unverschieblich gehaltene Scheibe eine Bremsscheibe aufgesetzt ist, welche gegen eine radiale Gehäuseinnenfläche reibend anliegt und mit einer schrägen Ringfläche des Zugankers kraftschlüssig gekoppelt ist. Zweckmäßig wird die kraftschlüssige Kopplung über die Sperrelemente, die vorteilhafterweise Kugeln sind, erreicht.

Die Radialbremse kann in vorteilhafter Weise in der Form ausgestaltet sein, dass die Scheibe mit radial-elastischen Segmenten ausgerüstet ist, die gegen eine axiale Innenfläche des Gehäuses reibend anliegen, wobei jedes der Segmente mit der schrägen Ringfläche des Zugankers bei dessen Anspannen kraftschlüssig gekoppelt ist. Die kraftschlüssige Kopplung kann auch hier zweckmäßig über die Sperrelemente, vorzugsweise über die Kugeln erfolgen.

Die Radialbremse kann sowohl an einer nur rotatorisch bewegbaren wie auch an einer axial bewegbaren Scheibe ausgebildet sein. Im letzteren Fall ist die Scheibe mit einem durch einen axialen Gehäuseschlitz sich erstreckenden Handgriff verbunden, der axial beweglich ist.

Im übrigen sind die bevorzugten Ausgestaltungen der Erfindung in den Unteransprüchen angegeben. Nachstehend werden Ausführungsbeispiele der Erfindung unter Bezugnahme auf die beigefügte Zeichnung im einzelnen beschrieben. Es zeigen:
Fig. 1: einen Axialschnitt durch einen Spannfutter gemäß einer ersten Ausführungsform der Erfindung;
Fig. 2: eine Draufsicht auf das Spannfutter nach Fig. 1;
Fig. 3: eine perspektivische Ansicht einer Scheibe für ein Kugelgesperre des Spannfutters nach Fig. 1;
Fig. 4: eine perspektivische Ansicht eines Scheibeneinsatzes zum Spannfutter nach Fig. 1;
Fig. 5: eine perspektivische Darstellung eines Spannfutters gemäß einer zweiten Ausführungsform der Erfindung;
Fig. 6: eine Ansicht des Spannfutters aus Fig. 5 von unten;
Fig. 7: einen Axialschnitt durch das Spannfutter nach Fig. 5;
Fig. 8: eine Draufsicht auf die Scheibe aus dem Spannfutter gemäß Fig. 5; und
Fig. 9: eine Seitenansicht eines Zugbolzens.

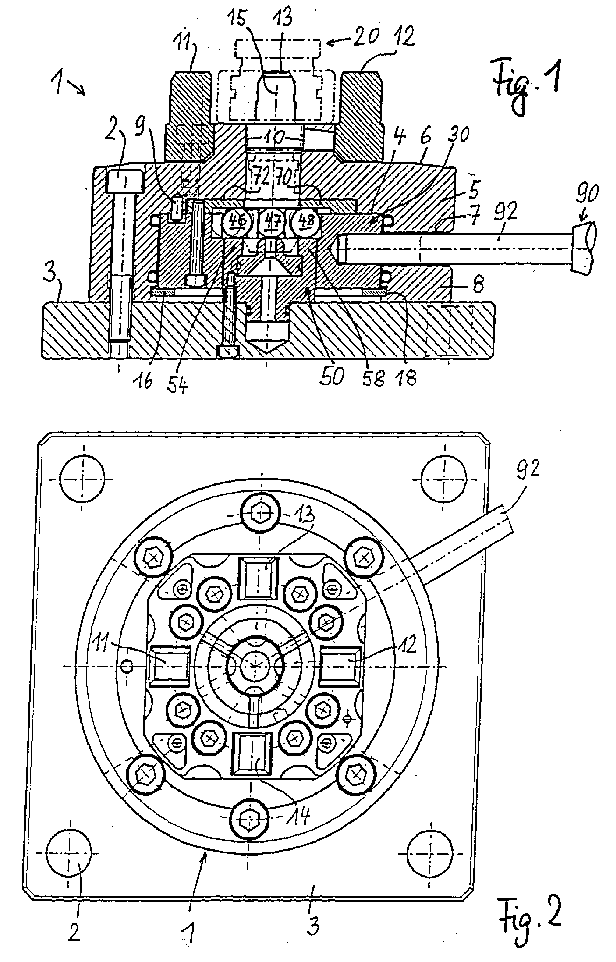

Das im Ganzen mit 1 bezeichnete Spannfutter ist mittels mehreren Bolzen 2 auf einer Grundplatte 3 festgeschraubt, die Teil einer Werkzeugmaschine, beispielsweise einer Drehbank, einer Fräsmaschine oder auch einer Elektroerodiermaschine sein kann. Das zylindrische Gehäuse 5 des Spannfutters 1 besitzt eine mittige Aufnahme 10 in Form einer Durchgangsbohrung in das Innere des Gehäuses 5. Ein in Fig. 1 nur gestrichelt angedeuteter Zugbolzen 20, von dem ein Beispiel Fig. 9 zeigt, kann mit seinem Kopf 22 voran in die Aufnahme 10 eingeführt werden und ist an dem gegenüberliegenden Ende 24 entweder direkt mit einem nicht dargestellten, zu bearbeitenden Werkstück oder mit einem ebenfalls nicht gezeigten Werkstückträger verbunden. Ein Beispiel eines Werkstückträgers ist in der europäischen Patentschrift 255 042 beschrieben, der mit dem Ende 24 des Zugbolzens lösbar verbunden ist.

An der Oberseite 6 des Gehäuses 5 sind mehrere Referenzelemente ausgebildet, die mit am Werkstück oder am Werkstückhalter vorgesehenen Referenzgegenelementen dann in Eingriff oder Anlage gelangen, wenn der mit dem Werkstück oder dem Werkstückträger verbundene Zugbolzen 20 ganz in die Aufnahme 10 eingeführt und in ihr eingespannt ist. Der Eingriff beziehungsweise die Anlage der Referenzelemente in bzw. an die Referenzgegenelemente bewirkt, dass das Werkstück beziehungsweise der Werkstückträger in einer bezüglich des Spannfutters 1 eindeutigen Lage positioniert ist, und zwar üblicherweise innerhalb eines rechtwinkligen x, y, z-Koordinatensystems, dessen z-Achse mit der Mittellinie 15 der Aufnahme 10 zusammenfällt. Es sind mehrere aus Referenzelementen und den Referenzgegenelementen bestehende Referenzsysteme bekannt und beispielsweise in den Dokumenten EP 111 092 oder EP 255 042 oder EP 722 809 im einzelnen beschrieben. Sie brauchen daher hier nicht detailliert erläutert zu werden. Zur Erläuterung der Erfindung genügt es, auf vier Prismenzapfen 11, 12, 13, 14 als Referenzelemente hinzuweisen, die sich aus der Oberseite 6 in Umfangsrichtung gleich geabstandet, d.h. kreuzweise um die Aufnahme 10 herum erheben. Der Zugbolzen 20 ist nach Eingriff der Prismenzapfen 11, 12, 13, 14 in entsprechende Referenzgegenelemente am Werkzeugträger in der Aufnahme 10 nicht mehr drehbar.

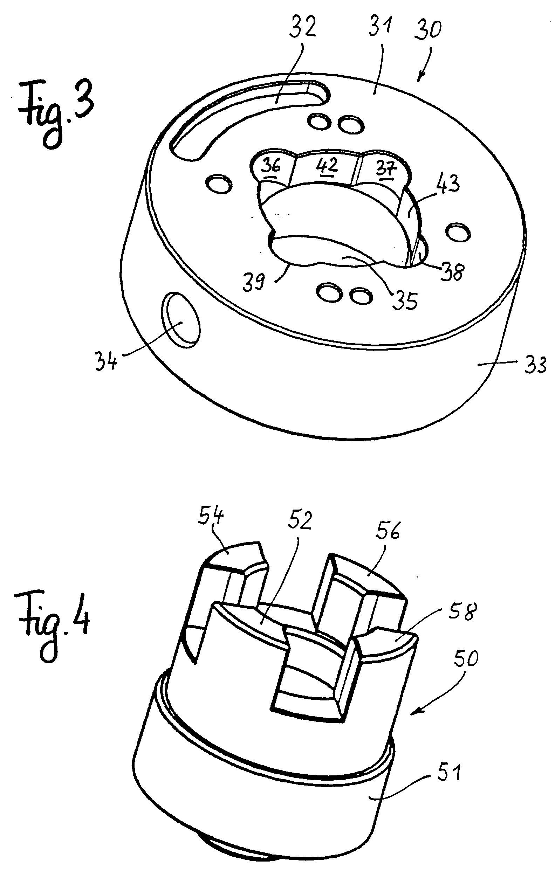

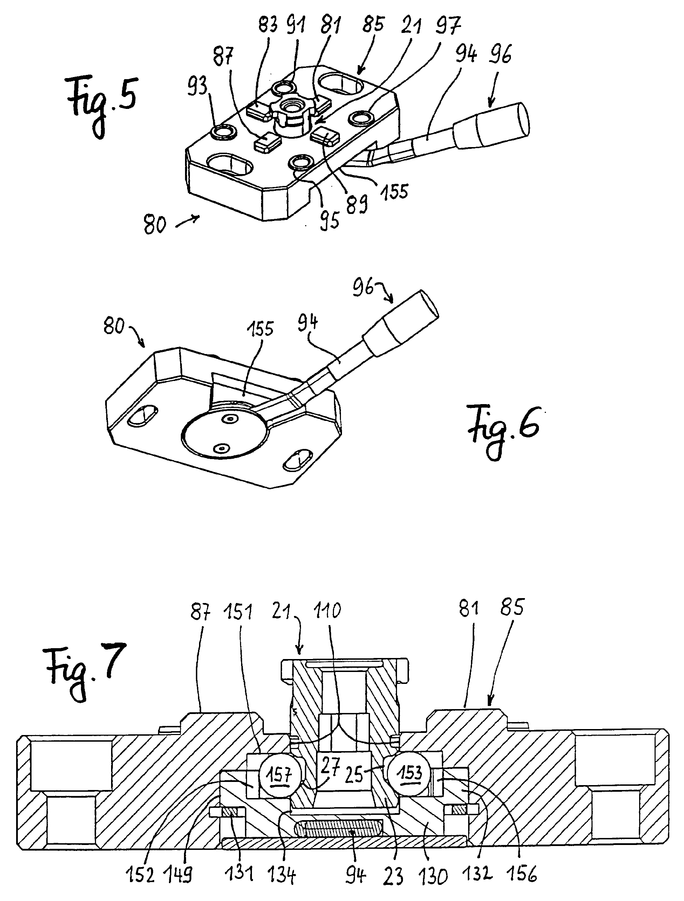

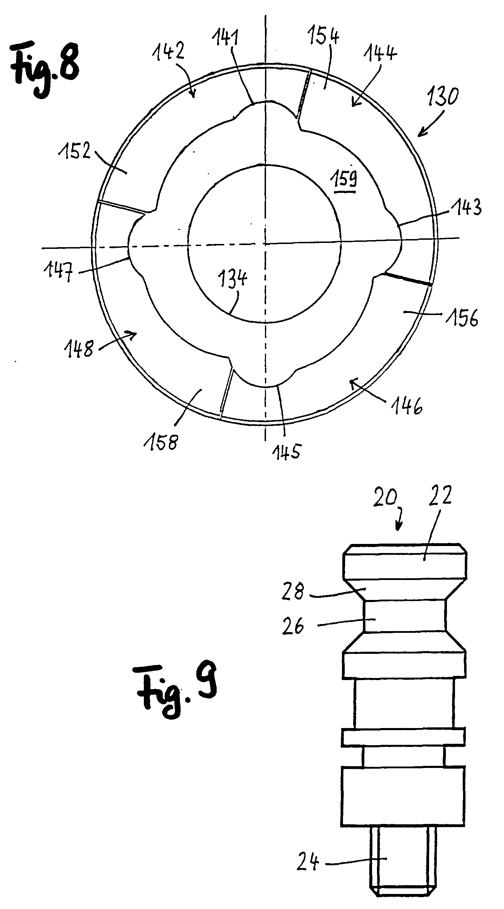

Die Spannvorrichtung für den Zugbolzen 20 ist in dem Innenraum des im Querschnitt U-förmigen Gehäuses 5 beherbergt und umfaßt
eine in dem Innenraum um die Mittelachse 15 drehbare Scheibe 30, die für sich in Fig. 3 gezeigt ist. Aus der Oberseite 31 der im wesentlichen zylindrischen Scheibe 30 ist zunächst ein Bogenschlitz 32 ausgenommen, in welchen ein im Gehäuse 5 fest verankerter Stift 9 eintaucht, so dass die in Umfangsrichtung genommene Länge des Schlitzes 32 denjenigen Winkel definiert, um welchen die Scheibe 30 relativ zum Gehäuse 5 drehbar ist. In die Seitenwand 33 der Scheibe 30 ist eine Gewinde-Blindbohrung 34 eingebracht, in welcher der Schaft 92 eines im Ganzen mit 90 bezeichneten Handgriffs verankert werden kann, wobei sich der Schaft 92 durch einen seitlichen, quer zur Mittellinie 15 geschnittenen Schlitz 7 in einer Seitenwand 8 des Gehäuses 5 erstreckt. Da sich der Schaft 92 quer zur Mittelinie erstreckt, kann durch Betätigen des Handgriffs 90 die Scheibe 30 in dem durch den Schlitz 32 definierten Winkelbereich um die Mittellinie 15 verdreht werden.

Die Scheibe 30 ist von einer zentralen Durchgangsbohrung 35 durchsetzt, deren Mittelachse in der Mittellinie 15 liegt. Um die Zentralbohrung 35 sind an einem der Oberseite 31 benachbarten Abschnitt vier kreuzweise einander gegenüberliegende, in Draufsicht kreisbogenförmige, radiale Taschen 36, 37, 38, 39 ausgebildet, in denen die jeweils radial außen liegende Kalotte jeder Kugel 46, 47, 48 (die Kugel für die Tasche 39 ist nicht dargestellt) Platz findet. Die jeweilige axiale Verbindungswand von einer der Taschen zu der in gleicher Umfangsrichtung jeweils benachbarten Tasche, also beispielsweise die Verbindungswände 42 bzw. 43 von der Tasche 36 zur Tasche 37 beziehungsweise von der Tasche 37 zur Tasche 38, sind gleichsinnig in Umfangsrichtung zunehmend nach radial außen versetzt, so dass jede Verbindungswand eine Art Keilfläche bildet.

Die Oberseite 31 der Scheibe 30 liegt mit ihrem Randbereich gemäß Fig. 1 mit kleinem Spiel an einer innenseitigen Ringfläche 4 des Gehäuses 5 an. Die Scheibe 30 wird von einem in einem Ringschlitz 18 der Gehäuseinnenwand gehaltenen Sprengring 16 unterfaßt.

In die Zentralbohrung 35 der Scheibe 30 erstreckt sich ein mit der Grundplatte 3 fest verschraubter Stützkörper 50, aus dessen zylindrischem Unterteil 51 sich vier kreuzweise angeordnete Stützen 52, 54, 56, 58 erheben, von denen in Fig. 1 nur die Stützen 54 und 58 zu erkennen sind. Jede der Stützen hat kreisförmigen Umriß und die planen Oberflächen aller Stützen 52, 54, 56, 58 liegen in einer Ebene, die sich im eingebauten Zustand quer zur Mittellinie 15 erstreckt. Wie insbesondere aus Fig. 1 ersichtlich ist, ruht jede der Kugeln auf der Oberfläche jeweils einer der Stützen. Auf die Oberseite 31 der Scheibe 30 ist im übrigen eine Bremsscheibe 70 aufgeschraubt, deren Zentralloch mit der Aufnahme 10 fluchtet. Jede Kugel 46, 47, 48 ist zwischen der Unterseite der Bremsscheibe 70 und der Oberseite des zugehörigen Pfostens 52, 54, 56, 58 eingefangen und daher nicht drehbar.

Die Oberseite der Bremsscheibe 70 liegt an eine innere, die Aufnahme 10 umgebende Bremsfläche 72 des Gehäuses 5 an.

Ersichtlich bilden die Scheibe 30 mit den Taschen 36, 37, 38, 39 und deren Verbindungswänden 42, 43 sowie die Pfosten 52, 54, 56, 58 und die Kugeln 46, 47, 48 ein Kugelgesperre für den Zugbolzen 20. Das Kugelgesperre ist für das Einführen des Zugbolzens 20 offen, wenn jede der Kugeln vor ihrer zugehörigen Tasche steht, was durch Verdrehen der Scheibe 30 mittels des Handgriffs 90 in die Freigabestellung ermöglicht wird. Ist der Zugbolzen 20 in die Aufnahme soweit eingefahren, dass eine dem Kopf 22 benachbarte zur Mittellinie 15 quer liegende Ringnut 26 den Kugeln 46, 47, 48 gegenübersteht, kann die Scheibe 30 in ihre Spannstellung verdreht werden, in welcher die Kugeln aus den Taschen 36, 37, 38, 39 durch die Verbindungsflächen 42, 43 in die Ringnut 26 gedrängt werden. In der Spannstellung liegen die z-Referenzflächen am Spannfutter 1 an den z-Referenzgegenflächen am Werkstück oder Werkstückhalter aneinander an. Wird während der Bearbeitung des Werkstückes auf dieses und damit auf den Zugbolzen eine in Richtung der Mittellinie 15 wirkende Zugkraft ausgeübt, tendiert die die Ringnut 26 zum Kopf 22 hin begrenzende schräge Ringfläche 28 dazu, die Kugeln 46, 47, 48 radial nach außen zu drängen. Ein radiales Nach-Außen-Drängen der Kugeln ist nur möglich, wenn die Scheibe 30 von ihrer Spannstellung in Richtung auf die Freigabestelle verdreht wird. An dieser Verdrehung wird die Scheibe 30 jedoch durch die Bremsscheibe 70 gehindert, die bei Auftreten der erwähnten Zugkraft von den Kugeln 46, 47, 48 gegen die Bremsfläche 72 des Gehäuses 5 gedrängt wird. Damit wird der Reibungseingriff zwischen Reibungsscheibe 70 und Reibfläche 72 erhöht mit der Folge, dass die Scheibe 30 sich nicht verdrehen kann. Damit ist die Spannkraft für den Zugbolzen 20 proportional zu einer längs der Mittellinie 15 auf den Zugbolzen 20 ausgeübten Zugkraft. Denn je größer diese Kraft ist, desto höher ist auch die zwischen der Bremsscheibe 70 und der Bremsfläche 72 wirkende, eine Drehung der Scheibe 30 verhindernde Bremskraft. Wie leicht zu erkennen ist, steht der angespannte Zugbolzen 20 über die Kugeln 46, 47, 48 mit der Bremsscheibe 30 in Kraftschluß.

Bei dem zweiten Ausführungsbeispiel der Erfindung wird als Bremse gegen das selbstätige Verstellen oder Drehen der Scheibe des Kugelgesperres unter der Wirkung einer axialen Zugkraft auf dem angespannten Zugbolzen nicht die vorstehend erwähnte axial wirkende, sondern eine nachfolgend zu beschreibende radial wirkende Bremse verwendet. Aus der Oberseite des Gehäuses 85 eines Spannfutters 80 stehen wieder kreuzweise angeordnete Referenzelemente 81, 83, 87, 89 für die Ausrichtung eines mit einem Zuganker 21 drehfest verbundenen Werkstücks oder Werkstückträgers (die nicht dargestellt sind) sowie z-Referenzelemente 91, 93, 95,97 vor. Die Grundplatte entsprechend der Grundplatte 3, auf welche das Spannfutter 85 aufgebolzt ist, ist hier weggelassen. Das Gehäuse 85 besitzt eine zentrale Aufnahme 110, in welche der Zugbolzen 21 axial ohne wesentliches Spiel eingesetzt werden kann. Der Zugbolzen 21 weist in der Nähe seines Kopfes 23 eine Ringnut 25 mit zum Kopf anschließender nach außen schräger Ringfläche 27 auf. In einer U-förmigen Ausnehmung aus dem Gehäuse 85 ist eine Scheibe 130 beherbergt, deren randseitiger Ring 132 mit seiner Oberseite gegen eine radiale Schulter 133 des Gehäuses 85 anliegt. Die Scheibe 130 ist unterhalb des Rings hinterschnitten, so dass ein in einer gehäuseseitigen Nut eingefangener Sprengring 131 den Ring 132 unterfassen kann. Die Scheibe 130 ist in dem Gehäuse 85 daher axial unverschiebbar, jedoch drehbar gehalten.

Der untere Teil der Scheibe 130 ist fest mit dem Schaft 94 eines Handgriffs 96 verbunden, welcher sich aus einem zur Mittelachse 115 der Aufnahme 110 quer liegenden, seitlichen Ausschnitt 155 aus einer Wand des Gehäuses 80 erstreckt..

Wie insbesondere Fig. 8 zeigt, besitzt die Scheibe 130 eine zentrale Aufbohrung 134, in welche der Kopf 23 des Zugbolzens 21 eingeführt werden kann. Der Ring 132 ist in vier kreuzweise angelegte Segmente 142, 144, 146, 148 unterteilt, deren in einer bestimmten Umfangsrichtung jeweils vorderer Abschnitt 152, 154, 156, 158 von dem übrigen Teil der Scheibe 130 quer zur Mittelachse der Aufnahme 110 getrennt ist, so dass der jeweils vorderer Abschnitt in radialer Richtung elastisch deformierbar ist. An jedem Segment 142, 144, 146, 148 ist der in der genannten Umfangsrichtung jeweils hintere Abschnitt fest mit der Scheibe 130 verbunden und weist jeweils eine Auskehlung 141, 143, 145, 147 zur Aufnahme der radial außenseitigen Kalotte jeweils einer Gesperrekugel auf. Von den vier Gesperrekugeln sind in Fig. 7 nur die Kugeln 153 und 157 für die Auskehlung 143, 147 zu erkennen. Der Abstand der jeweils vorderen Abschnitte 152, 154, 156, 158 jedes Segments 142, 144, 146, 148 von der Begrenzung der Ausnehmung 134 nimmt in der genannten Umfangsrichtung zu, so dass bei Drehung der Scheibe 130 durch entsprechende Betätigung des Handgriffs 96 in der genannten Umfangsrichtung jede der vier Gesperrekugeln in Richtung auf die Aufbohrung 134 gedrückt wird.

Jede der vier Gesperrekugeln 153, 157 ist in axialer Richtung zwischen der Auflagefläche 159 der Scheibe 130 und einer ihr gegenüberliegenden Innenfläche 151 des Gehäuses 85 eingefangen.

Der Winkelbereich der möglichen seitlichen Verschwenkung des Handgriffes 96 ist durch die Länge des Ausschnitts 155 des Gehäuses 85 begrenzt und entspricht etwa maximal der Länge je eines der Segmente 142, 144, 146, 148.

Wird der Handhebel 96 gegen ein Ende des Ausschnitts 155 gelegt, dreht sich die Scheibe 130 in Spannstellung für den Zugbolzen 21; wird der Handgriff 96 gegen das andere Ende der Ausnehmung 155 gelegt, dreht sich die Scheibe 130 in ihre Freigabestellung für den Zugbolzen 21.

Angenommen der Zugbolzen 21 sei gemäß Fig. 7 in dem Spannfutter 80 wie dargestellt angespannt, und zwar durch Eingriff der vier Gesperrekugeln 153, 157 in die Ringnut 25. Wird im Zuge der Bearbeitung eines mit dem Zugbolzen 21 verbundenen Werkstücks auf dieses und damit auf den Zugbolzen 21 eine axiale Zugkraft ausgeübt, versucht die schräge Ringfläche 27 desselben jede der vier Gesperrekugeln 153, 157 radial nach außen zu drücken mit der Folge, dass der jeweils vordere radial elastische Abschnitt 152, 154, 156, 158 jedes Segments 142, 144, 146, 148 nach radial außen gegen eine axiale Seitenwand 149 des Gehäuses gedrückt wird. Dadurch vergrößert sich der Reibungseingriff zwischen der Außenfläche jedes vorderen Segmentabschnittes 152, 154, 156, 158 mit der Gehäusefläche 149, so dass die Scheibe 130 gegen ein selbsttätiges Verdrehen aus der Spannstellung gehindert ist. Ersichtlich ist die Größe der Bremskraft proportional zur Größe der auf den Zugbolzen 21 ausgeübten axialen Zugkraft.

Daher findet während der Bearbeitung des Werkstückes eine Selbstblockierung des Zugbolzens 21 gegen Lösen seines Anspannens mit mechanischen Mitteln statt.

In einer nicht dargestellten dritten Ausführungsform der Erfindung kann etwa die aus der Schrift EP 255 042 B1 bekannte Spannvorrichtung für einen Zugbolzen der in Fig. 9 dargestellten Art auf mechanische Verstellung dadurch umgestellt werden, dass die axial bewegliche Scheibe mit einem durch einen Vertikalschlitz des Spannfuttergehäuses sich erstreckenden Handgriff versehen und mit radial-elastischen Segmenten entsprechend den Segmenten 152, 154, 156, 158 ausgerüstet wird. Daher ist die Erfindung nicht darauf beschränkt, dass die Scheiben 30 und 130 axial unverschiebbar jedoch drehbar sind. Sie kann auch als Radialbremse in einem Spannfutter mit vertikal beweglicher Scheibe gemäß der zuletzt genannten Schrift realisiert werden.

## Patentansprüche

1. Spannfutter (1; 80) mit einer mittigen Aufnahme (10; 110) und einer um die Aufnahme angeordneten, zwischen einer Spannstellung, in welcher ein in die Aufnahme eingeführter Zugbolzen (20; 21) angespannt ist, und einer Freigabestellung, in der der Zugbolzen freigegeben ist, beweglichen Scheibe (30; 130), welche ein Gesperre mit mehreren in Umfangsrichtung gleich verteilten Sperrelementen (46, 47, 48; 153, 157) aufweist, sowie mit einer Blockiervorrichtung, die Bewegungen der Scheibe unter dem Einfluß von axialen Zugkräften auf den angespannten Zugbolzen erschwert, **dadurch gekennzeichnet, dass** der Zugbolzen mit einer Bremse (70, 72; 152, 154, 156, 158) derart kraftschlüssig gekoppelt ist, dass die Bremskraft der Bremse proportional zu einer auf den Zugbolzen ausgeübten Zugkraft ist.

2. Spannfutter nach Anspruch 1, **dadurch gekennzeichnet, dass** die Blockiervorrichtung eine Axialbremse ist.

3. Spannfutter nach Anspruch 2, **dadurch gekennzeichnet, dass** an der drehbaren, in einem Gehäuse (5) axial unverschieblich gehaltenen Scheibe (30) eine radiale Bremsfläche vorgesehen ist, welche gegen eine radiale Gehäuseinnenfläche (72) reibend anliegt und bei angespanntem Zuganker (20) mit einer schrägen Ringfläche (28) des Zugankers (20) kraftschlüssig gekoppelt ist.

4. Spannfutter nach Anspruch 3, **dadurch gekennzeichnet, dass** die Bremsfläche die Oberseite einer mit der Scheibe (30) verbundenen und mit dem Zuganker kraftschlüssig gekoppelten Bremsscheibe (70) ist.

5. Spannfutter nach Anspruch 1, **dadurch gekennzeichnet, dass** die Bremse eine Radialbremse ist.

6. Spannfutter nach Anspruch 5, **dadurch gekennzeichnet, dass** die Scheibe (130) mit radial-elastischen Segmenten (152, 154, 156, 158) ausgerüstet ist, die gegen eine axiale Innenfläche (148) eines Gehäuses (85) reibend anliegen, wobei jedes der Segmente mit einer schrägen Ringfläche (27) des angespannten Zugankers (21) krafschlüssig gekoppelt ist.

7. Spannfutter nach einem der Ansprüche 3, 4 oder 6, **dadurch gekennzeichnet, dass** die kraftschlüssige Kopplung des Zugankers (20; 21) über die Sperrelemente, insbesondere Kugeln (46, 47, 48; 153, 157) erfolgt.

8. Spannfutter nach einem der Ansprüche 6 oder 7, **dadurch gekennzeichnet, dass** die Scheibe (130) axial unverschieblich ist.

9. Spannfutter nach einem der vorstehenden Ansprüche, **dadurch gekennzeichnet, dass** die Scheibe (30; 130) mit einem durch einen Gehäuseschlitz nach außen vorstehenden Handgriff (90; 96) verbunden ist, der innerhalb eines vorgegebenen Winkelbereichs zwischen einer Freigabestellung und einer Spannstellung der Scheibe verschwenkbar ist.

10. Spannfutter nach einem der Ansprüche 6, 7 oder 9, **dadurch gekennzeichnet, dass** die unverdrehbare Scheibe axial verschieblich und mit einem sich durch ein Gehäuse erstreckenden, axial verschwenkbaren Hebel gekoppelt ist.

11. Spannfutter nach einem der vorstehenden Ansprüche, **dadurch gekennzeichnet, dass** an einer Gehäuseoberseite (6) Referenzelemente (11, 12, 13, 14; 81, 83, 87, 89; 91, 93, 95, 97) für die Positionierung eines mit dem Zuganker festverbundenen Werkstückes oder Werkstückträgers innerhalb eines Koordinatensystems vorgesehen wird.
